# FASCICULE DE BREVET EUROPEEN

(11) **EP 0 555 146 B1**
(45) Date de publication et mention de la délivrance du brevet: **01.05.1996**
(21) Numéro de dépôt: 93400270.0
(22) Date de dépôt: 03.02.1993
(51) Int. Cl.: B60S 1/32, B60S 1/40

(54) **Essuie-glace, muni d'un capuchon, notamment pour véhicule automobile**
Scheibenwischer mit Abdeckkappe, insbesondere für Kraftfahrzeuge
Windscreen wiper with covering cap, in particular for motor vehicles

(30) Priorité: 03.02.1992 FR 9201166
(43) Date de publication de la demande: 11.08.1993
(73) Titulaire: VALEO SYSTEMES D'ESSUYAGE, F-78180 Montigny-Le-Bretonneux (FR)
(72) Inventeur: Schön, Wilfried, F-63580 St. Etienne, Usson (FR)
(74) Mandataire: Gamonal, Didier

(56) Documents cités:
- EP-A- 0 337 042
- DE-A- 2 847 978
- DE-A- 3 222 864
- FR-A- 2 631 300

## Description

La présente invention se rapporte à un essuie-glace, notamment pour véhicule automobile.

Un essuie-glace se compose habituellement d'un bras comportant une extrémité libre apte à venir coopérer avec un balai d'essuie-glace de façon à porter ledit balai d'une manière articulée.

Deux dispositions générales du bras par rapport au balai sont actuellement utilisées.

Une première disposition dans laquelle le bras est disposé, au moins en partie, au-dessus du balai et une deuxième disposition dans laquelle le bras est situé latéralement par rapport au balai.

Dans les deux dispositions précitées, il est nécessaire de relier le bras au balai de manière à ce que ce balai puisse être articulé autour du bras tout en permettant un éventuel démontage du balai par rapport au bras.

Dans ces cas, il est prévu que le balai ou le bras porte une broche d'articulation sur laquelle est disposée une pièce de connexion permettant l'articulation du balai autour du bras tout en autorisant le démontage souhaité dudit balai par rapport audit bras.

La demanderesse a constaté que ces dispositions, bien que donnant satisfaction, présentaient certains inconvénients pouvant nuire au bon fonctionnement de l'essuie-glace.

En effet, la pièce de connexion est généralement en matière plastique alors que la broche est en métal et cette articulation matière plastique-métal n'est pas protégée des agressions extérieures telles que des chocs par exemple ou des introductions de corps étrangers.

De plus, la zone d'articulation du bras avec le balai offre une résistance aérodynamique et présente un aspect inesthétique.

La présente invention se propose de remédier aux inconvénients mentionnnés ci-dessus en présentant un dispositif d'essuie-glace dans lequel la zone d'articulation entre le bras et le balai est assurée de bien fonctionner et cela quelles que soient les conditions extérieures.

Selon l'invention, un essuie-glace, notamment pour véhicule automobile, constitué d'un balai d'essuie-glace portant un axe d'articulation apte à coopérer avec une extrémité de liaison d'un bras d'essuie-glace, ledit axe faisant saillie latéralement par rapport au balai de manière à ce que le bras soit disposé latéralement par rapport audit balai, est caractérisé en ce que le bras d'essuie-glace porte un capuchon muni de moyens de verrouillage avec le bras pour recouvrir l'extrémité de liaison dudit bras.

Grâce à l'invention, l'extrémité du bras reliée au balai est recouverte par un capuchon en interdisant ainsi toutes agressions extérieures, tout en offrant un aspect esthétique.

Selon un mode de réalisation de l'invention, le capuchon porte une rainure de montage.

Selon un autre mode de réalisation de l'invention, les moyens de verrouillage consistent en une saillie portée par le capuchon et coopérant avec une ouverture portée par le bras. Selon un autre mode de réalisation de l'invention, le capuchon porte des butées en translation du bras.

Selon un autre mode de réalisation de l'invention, les butées en translation consistent en des portées coopérant avec le bras.

Selon un autre mode de réalisation de l'invention, le capuchon porte des moyens de positionnement avec le bras.

Selon un autre mode de réalisation de l'invention, les moyens de positionnement consistent en un bossage coopérant avec un évidement.

Selon un autre mode de réalisation de l'invention, le bossage est porté par le capuchon ou le bras et coopère avec l'évidement porté par le bras ou le capuchon.

Selon un autre mode de réalisation de l'invention, les butées de positionnement consistent en au moins une saillie latérale coopérant avec des logements du bras.

Selon un autre mode de réalisation de l'invention, la rainure de montage coopère avec un épaulement de la broche.

Selon un autre mode de réalisation de l'invention, caractéristique, le capuchon est formé d'un boîtier et d'un bouclier.

Les autres caractéristiques et avantages de l'invention vont ressortir maintenant de la description qui va suivre, faite uniquement à titre d'exemple, et en se référant aux dessins annexés sur lesquels :
- la figure 1 est une vue partielle en coupe d'un essuie-glace selon l'invention, cette coupe étant prise selon la ligne AA de la figure 2 ;
- la figure 2 est une vue partielle en coupe selon la ligne BB de la figure 1 ;
- la figure 3 est une vue partielle en coupe selon la ligne CC de la figure 1 ;
- la figure 4 est une vue en coupe correspondant à la figure 1 dans laquelle certains éléments ont été enlevés ;
- la figure 5 est une vue latérale selon la flèche D de la figure 1 ;
- la figure 6 est une vue partielle en coupe transversale selon la ligne EE de la figure 2 ;
- la figure 7 est une vue partielle selon la flèche F de la figure 5 ;
- la figure 8 montre une première variante de la figure 6 ;
- la figure 9 montre une autre variante de la figure 6 ;
- la figure 10 est une vue partielle en coupe selon la flèche GG de la figure 9 ;
- la figure 11 est une vue partielle selon la flèche H de la figure 10.

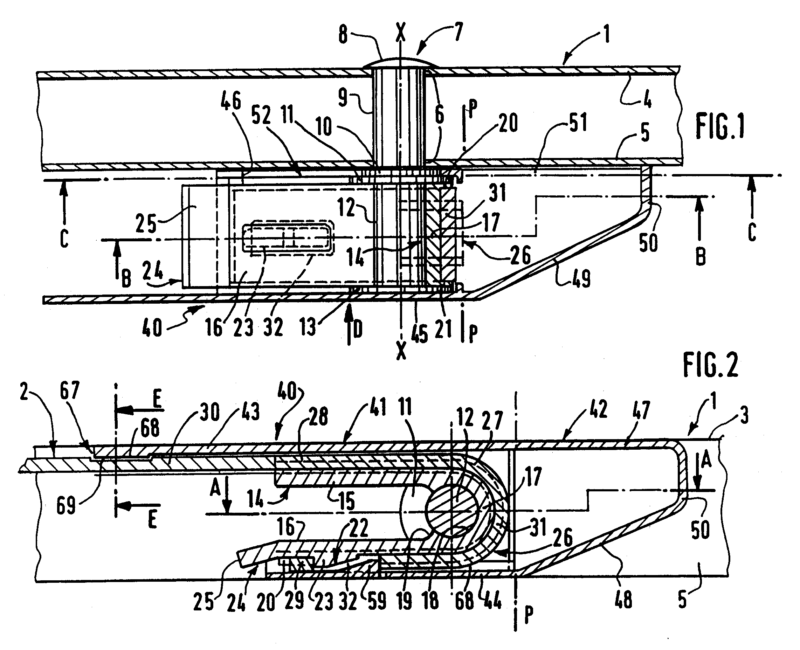

En se référant maintenant aux figures 1 et 2, un essuie-glace comporte un balai d'essuie-glace 1 qui est porté à articulation par un bras d'essuie-glace 2.

Le balai d'essuie-glace 1 présente, en section, un profil en U inversé constitué d'un dos 3 et de deux ailes latérales 4, 5 sensiblement parallèles entre elles et orthogonales au dos 3.

Les ailes 4, 5 portent des ouvertures sensiblement cylindriques 6 aptes à être traversées par une broche d'articulation 7 d'axe XX sensiblement perpendiculaire aux ailes 4 et 5.

La broche d'articulation 7 est constituée d'une tête 8 prenant appui sur la face externe de l'aile 4, celle opposée à l'intérieur du U, d'une tige sensiblement cylindrique 9 issue de la tête 8 pour traverser les ouvertures 6 des ailes 4, 5.

Cette tige 9 se prolonge par un épaulement 10 de plus grand diamètre que le diamètre de la tige 9 qui se poursuit axialement, considérant l'axe XX de la broche 7, par un autre épaulement formant un flasque 11 et qui est de plus grand diamètre que le diamètre de l'épaulement 10.

A partir de ce flasque 11, un axe de liaison 12, de forme cylindrique, est issu dudit flasque et se termine à son extrémité libre par un flasque d'extrémité 13 de diamètre sensiblement identique au flasque 11.

Comme visible sur la figure 1, la broche 7 est fixée sur le balai 1 par appui de la face plane de l'épaulement 10 sur la face externe de l'aile 5 et par l'écrasement de la tête 8 de la broche 7, la tête 8 étant utilisée en tant que tête de rivet.

L'axe de liaison 12 de la broche 7 est apte à recevoir une pièce d'articulation 14.

Cette pièce d'articulation ou connecteur, connue dans la technique antérieure, est un connecteur à profil longitudinal sensiblement en forme de U de manière à présenter deux branches 15, 16 élastiquement flexibles l'une par rapport à l'autre grâce à une partie courbe 17.

De manière connue en soi, le connecteur 14 présente, en outre, un moyen de réception de l'axe de liaison 12, consistant en un logement 18, de section transversale sensiblement circulaire, situé dans la partie concave que présente ledit connecteur et présentant une ouverture 19 dirigée vers l'ouverture du U.

De préférence, le diamètre du logement 18 est égal à celui du diamètre de l'axe de liaison 12 mais la dimension de l'ouverture 19 est inférieure audit diamètre du logement.

Egalement de manière connue en soi, le connecteur 14 comporte de chaque côté des branches 15, 16 une bordure 20, 21 constituant un flasque sensiblement orthogonal au plan des branches 15, 16 ces flasques s'érigeant vers l'extérieur du U.

Le connecteur présente en outre, sur l'une des branches, ici la branche 16, des moyens d'accrochage 22 sur le bras 2 formés ici par un cran 23 saillant à l'extérieur et des moyens de préhension 24 formés par une languette 25 issue à partir du bord extrême de la branche 16.

Ainsi, ce connecteur est apte à être monté sur l'axe de liaison 12 de la broche 7 d'une manière telle que les bordures 20, 21 soient au contact des flasques 11, 13 et que le logement 18 vienne épouser sensiblement la paroi dudit axe.

Ce connecteur est apte à recevoir l'extrémité de liaison 26 du bras 2 avec le balai 1. Sur les figures 1 et 2, et cela à titre d'exemple, l'extrémité de liaison 26 du bras 2 est ici conformée de manière à présenter une partie recourbée en forme de crochet 27 et le connecteur 14 est propre à se loger dans la concavité de cette partie recourbée de manière à ce que les branches 15, 16 dudit connecteur s'appuient respectivement sur les faces internes des branches 28, 29 du crochet, la branche 28 étant dans le prolongement de la tige 30 que présente habituellement un bras d'essuie-glace et la branche 29 étant disposée sensiblement parallèle à la branche 28 en étant reliée à celle-ci par une partie courbe 31 de forme complémentaire à la partie courbe 17 du connecteur 14.

Comme visible sur les figures, la branche 29 du crochet présente une ouverture 32, de forme sensiblement rectangulaire, apte à recevoir, entre autres, le cran 23 que porte la branche 16 du connecteur.

Ainsi, pour assurer le montage du balai 1 sur l'extrémité de liaison 26 du bras d'essuie-glace, il suffit de faire porter, par l'axe de liaison 12, la pièce d'articulation 14 en faisant coopérer le logement 18 de ce connecteur avec ladite tige.

Par la suite, l'extrémité recourbée en forme de crochet 27 du bras est glissée sur le connecteur 14 de façon à ce que le crochet 27 soit disposé entre les bordures 20, 21 en épousant la forme dudit connecteur.

Comme visible sur les figures 1 à 4, l'extrémité de liaison 26 du bras 1 porte un capuchon 40 recouvrant cette extrémité de liaison.

Ce capuchon 40 présente une forme de boîtier parallélépipédique 41 à extrémités ouvertes parallèles à la broche 7, et dont l'une des extrémités ouvertes est confondue avec un plan P, visible sur les figures 1 à 4, qui est sensiblement parallèle à la broche 7 en étant situé en avant de celle-ci et au-delà des bords circonférentiels des flasques 11, 13, l'avant étant considéré comme à droite sur les figures, ce boîtier 41 se poursuivant vers l'avant et à partir du plan P par un bouclier 42, l'autre des extrémités ouvertes du boîtier 41 étant située à l'opposé du plan P.

Le boîtier 41 présente une paroi supérieure horizontale plane 43, une paroi inférieure horizontale plane 44 sensiblement parallèle à la paroi 43, et à distance de celle-ci, une paroi latérale extérieure 45, et une paroi latérale intérieure 46 sensiblement parallèle à la paroi 45, les parois 45 et 46 étant sensiblement orthogonales aux parois 43, 44.

Le boîtier 41 se poursuit à l'avant et à partir du plan P par le bouclier 42 dans lequel la paroi supérieure 43 se poursuit dans le même plan par une paroi avant 47 horizontale et plane, la paroi inférieure 44 se poursuit par une paroi avant inférieure 48 inclinée par rapport à l'horizontal de manière à ce que, comme représenté sur'les figures, les parois 44, 48 convergent l'une vers l'autre, la paroi latérale extérieure 45 se poursuit par une paroi avant latérale extérieure 49 inclinée qui converge avec la paroi 45 et les parois avant 47, 48, 49 aboutissent à une paroi transversale 50 formant paroi de fermeture et comme visible sur les figures, la paroi latérale intérieure 46 se poursuit par une ouverture 51 délimitée par les bords des parois 46, 47, 48 et 50, ouverture pouvant être bouchée éventuellement par une paroi avant supplémentaire poursuivant la paroi 46 jusqu'à la paroi 50.

Comme décrit le bouclier est formé par les parois 47, 48, 49, 50 et l'ouverture 51 en présentant une forme allant en s'amenuisant à partir du boîtier 41 et le capuchon 40 est donc formé d'un boîtier 41 ouvert à ses deux extrémités et qui se poursuit en avant par le bouclier 42 fermant l'une des extrémités, cette extrémité étant considérée au niveau du plan P précédemment défini.

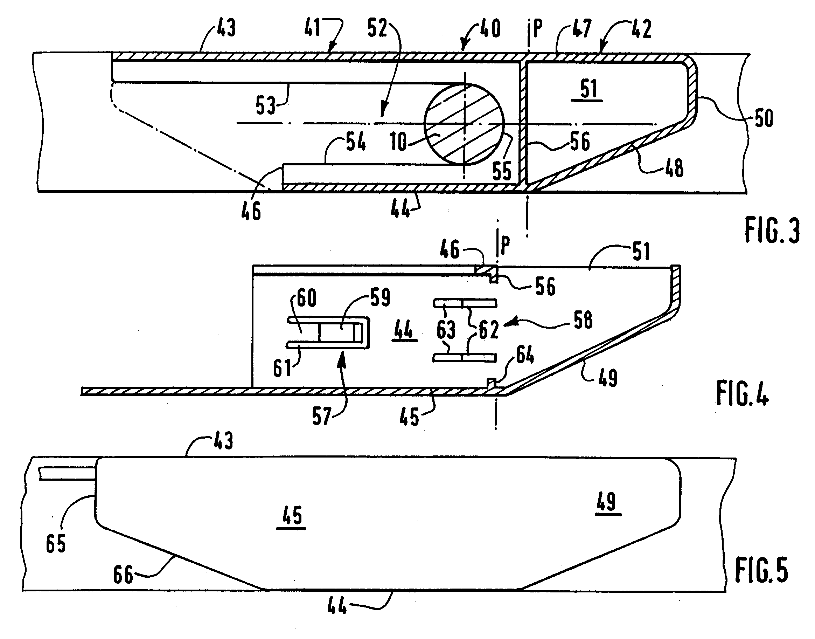

En se référant plus particulièrement à la figure 3, la paroi latérale interne 46 présente une rainure 52 dénommée dans la suite de la description rainure de montage et dont le rôle sera explicité ultérieurement.

Cette rainure présente deux bords longitudinaux 53, 54 sensiblement parallèles l'un à l'autre tout en étant sensiblement parallèles à la paroi 42, ces bords aboutissent d'une part à une partie sensiblement demi-circulaire 55 de dimension diamétrale correspondant sensiblement au diamètre de l'épaulement 10 en se situant en retrait par rapport au plan P et les bords 53, 54 débouchent sur l'extrémité libre de la paroi 46. A distance de cette partie 55 est prévue une nervure 56 saillante à l'intérieur du capuchon et s'étendant de la paroi supérieure 43 jusqu'à la paroi inférieure 44 en séparant la paroi latérale intérieure 46 de l'ouverture 51.

La paroi inférieure 44 porte, en se référant plus particulièrement à la figure 4, des moyens de verrouillage 57 et des butées en translation 58 avec le bras 1.

Les moyens de verrouillage 57 consistent en une saillie 59 portée par une languette 60 élastique formée dans la paroi 44 par un évidement 61 en forme de U allongé dont les extrémités des barres horizontales du U sont dirigées vers l'extrémité ouverte du capuchon et plus particulièrement vers le bord libre de la paroi 44.

En outre, la paroi inférieure 44 porte des butées en translation 58 consistant en des protubérances 62 portant des portées courbes 63 concaves dont la concavité fait face à l'extrémité ouverte du capuchon et correspondant sensiblement à la courbure de la partie courbe du bras d'essuie-glace.

La paroi latérale extérieure 45 porte également une nervure 64 disposée en vis-à-vis de la nervure 56 et s'étendant de la paroi supérieure 43 à la paroi inférieure 44 en faisant saillie à l'intérieur du capuchon et délimite la paroi latérale extérieure 45 de la paroi avant extérieure 49.

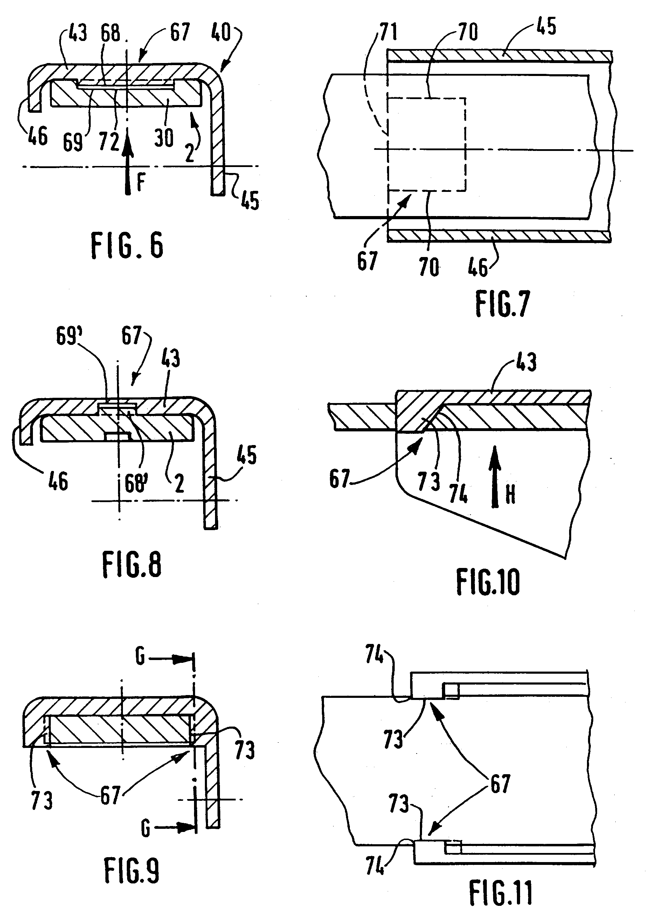

Préférentiellement et cela est visible sur la figure 5, le bord extrême libre de la paroi 45 présente un rebord droit 65 issu de la paroi supérieure 43 et qui se poursuit par un rebord incliné 66 de manière à venir rejoindre la paroi inférieure 44 qui comme visible sur cette figure est de dimension longitudinale réduite par rapport à la dimension longitudinale de la paroi 43.

En pratique, il peut être prévu que la paroi 46 comporte également un rebord droit se poursuivant par un rebord incliné aboutissant sur la paroi 44 et la rainure de montage 52 débouche au niveau des rebords droits et inclinés comme représenté en trait d'axe sur la figure 3.

En se référant à la figure 2 ainsi qu'aux figures 6 et 7, le capuchon 40 porte des moyens de positionnement 67 aptes à coopérer avec le bras 2. Ces moyens de positionnement 67 sont portés au niveau de l'extrémité ouverte du capuchon 40 et, ici consistent en un bossage 68 saillant à la partie de la face interne de la paroi supérieure 43 et apte à coopérer avec un évidement 69 disposé en correspondance sur le bras d'essuie-glace 2 et plus particulièrement sur la tige 30.

Comme visible sur les figures 6 et 7, le bossage 68 présente une forme parallélépipédique rectangle plate dont l'une des grandes faces horizontales est confondue avec la face interne de la paroi 43, les faces latérales 70 sont disposées à distances des faces internes des parois 45, 46, la face avant 71 est dans le prolongement du bord libre de la paroi 43, la face arrière est située à distance de la face 71 et dont l'autre des grandes faces horizontales est située à distance du fond 72 de l'évidement 69 qui présente une forme complémentaire au bossage 68.

Ainsi, (figures 1 et 2) après avoir monté le connecteur 14 sur l'axe de liaison 12 et après avoir monté le bras 2 et plus particulièrement son extrémité de liaison 26 sur le connecteur jusqu'à ce que ce crochet soit immobilisé par rapport au connecteur par coopération du cran 23 dans l'ouverture 32 de la branche 29 dudit crochet, il suffit d'introduire par son extrémité ouverte le capuchon 40 sur la partie recourbée 27 de l'extrémité de liaison 26 du bras 2.

Lors de cette introduction, l'ouverture de la rainure 52 coopère avec la périphérie de l'épaulement 10, cet épaulement présentant une épaisseur au moins égale à l'épaisseur de la paroi 46, de manière à ce que ladite paroi soit emprisonnée entre la face externe de l'aile 5 du balai 1 et la face plane du flasque 11 située en regard de ladite aile.

En continuant le mouvement selon une direction de droite à gauche en considérant les figures, la rainure 52 et plus particulièrement les bords 53, 54 glissent sur l'épaulement 10 jusqu'à ce que la partie semi-circulaire 55 vienne au contact avec la périphérie de l'épaulement 10.

Une fois cette position atteinte, les parois 43, 44 portent sur les branches 28, 29 du crochet 27, la paroi 46 est disposée en regard de l'aile 5 du balai et la paroi 45 porte sur la face externe du flasque 13.

De plus, la partie courbe 31 du crochet est en contact partiel avec les portées courbes 68 portées par le capuchon et la saillie 59 coopère avec l'ouverture 32 de la branche 29, ouverture apte à recevoir de manière tête-bêche à la fois le cran 23 du connecteur 14 et la saillie 59 et qui présente une dimension longitudinale suffisante. Dans cette position les moyens de positionnement 67 coopèrent entre eux de manière à ce que 'les faces latérales et les faces avant et arrière du bossage 68 soient au contact avec les faces correspondantes de l'évidement 69.

Ainsi le capuchon 40 est fixé et positionné sur l'extrémité de liaison 26 du bras 1 et lors du démontage du balai 1, pour son remplacement par exemple, il suffit d'appuyer sur la languette 25 pour déverrouiller le bras par rapport audit connecteur en faisant quitter le cran 23 de l'ouverture 32, de faire quitter l'axe 12 du logement 18, le capuchon restant sur le bras, pour le faire glisser le long de la rainure 52 jusqu'à ce que la broche 7 soit désolidarisée du connecteur et puisse sortir du capuchon.

Comme visible sur les figures 1 et 2, le boîtier 41 entoure le crochet 27 et le bouclier 42 se trouve en avant dudit crochet en ayant son ouverture 51 en regard de l'aile 5 du balai 1.

Dans cette position, le capuchon 40 est immobilisé en translation par rapport au bras 2 et est positionné par coopération du bossage 68 avec l'évidement 69.

Ainsi, une fois ce capuchon disposé sur l'extrémité de liaison du bras 2, les diverses pièces servant à la liaison du bras avec le balai sont enfermées à l'intérieur de celui-ci et permet une protection de ces diverses pièces vis-à-vis des agressions extérieures.

De même, il peut être constaté que ce capuchon 40 procure à la liaison bras-balai un ensemble esthétique ainsi que des surfaces aérodynamiques formées par les parois 47, 48, 49 et 50.

Bien entendu, et cela sans sortir du cadre de l'invention, il peut être envisagé que le volume creux délimité par les parois 47, 48, 49 et 50 soit un volume plein.

On se réfère maintenant à la figure 8 qui montre une variante de réalisation des moyens de positionnement 67 précédemment décrits et dans lesquels il est prévu qu'un bossage 68' soit porté par la face supérieure du bras 2 alors que l'évidement 69' est porté par la face interne de la paroi supérieure 41.

Bien entendu, la forme du bossage 68, 68' et de son évidement 69, 69' peut être différente de celle décrite, telles que notamment une forme circulaire.

Dans la variante des figures 9 à 11, il est prévu que les moyens de positionnement 67 soient formés au moins par une saillie latérale, ici deux saillies latérales 73 portées par les faces externes des parois latérales 45, 46 en venant coopérer avec des logements 74 formés par les côtés latéraux du bras d'essuie-glace 2.

Comme visible sur ces figures, la saillie latérale présente, en section, une forme de triangle rectangle dont le sommet est tronqué, la base du triangle correspond sensiblement à la paroi supérieure 43 et le côté incliné du triangle est dirigé vers l'intérieur dudit capuchon et le logement 74 présente une forme complémentaire à celle de la saillie latérale.

La présente invention n'est pas limitée à l'exemple de réalisation décrit mais englobe toutes variantes, à condition qu'elles restent dans le cadre de l'invention telle qu'elle est définie par les revendications.

## Revendications

1. Essuie-glace, notamment pour véhicule automobile, constitué d'un balai d'essuie-glace (1) portant un axe d'articulation (7) apte à coopérer avec une extrémité de liaison (26) d'un bras d'essuie-glace (2), ledit axe faisant saillie latéralement par rapport au balai de manière à ce que le bras (2) soit disposé latéralement par rapport audit balai, caractérisé en ce que le bras d'essuie-glace porte un capuchon (40) muni de moyens de verrouillage (57) avec le bras pour recouvrir l'extrémité de liaison dudit bras.

2. Essuie-glace selon la revendication 1, caractérisé en ce que le capuchon (40) porte une rainure de montage (52).

3. Essuie-glace selon la revendication 1, caractérisé en ce que les moyens de verrouillage consistent en une saillie (59) portée par le capuchon (40) et coopérant avec une ouverture (32) portée par le bras (2).

4. Essuie-glace selon l'une des revendications précédentes, caractérisé en ce que le capuchon (40) porte des butées en translation (58) du bras (2).

5. Essuie-glace selon la revendication 4, caractérisé en ce que les butées en translation (58) consistent en des portées (63) coopérant avec le bras (2).

6. Essuie-glace selon l'une des revendications précédentes, caractérisé en ce que le capuchon (40) porte des moyens de positionnement (67) avec le bras (2).

7. Essuie-glace selon la revendication 6, caractérisé en ce que les moyens de positionnement (67) consistent en un bossage (68,68') coopérant avec un évidement (69,69').

8. Essuie-glace selon la revendication 7, caractérisé en ce que le bossage (68,68') est porté par le capuchon ou le bras et coopère avec l'évidement (69,69') porté par le bras ou le capuchon.

9. Essuie-glace selon la revendication 7, caractérisé en ce que les butées de positionnement (67) consistent en au moins une saillie latérale (73) coopérant avec des logements (74) du bras.

10. Essuie-glace selon l'une des revendications précédentes, dans lequel l'extrémité de liaison (26) est reliée à une broche (7), caractérisé en ce que la rainure de montage (50) coopère avec un épaulement (10) de la broche (7).

11. Essuie-glace selon la revendication 1, caractérisé en ce que le capuchon (40) est formé d'un boîtier (41) se poursuivant par un bouclier (42).

## Claims

1. A screen wiper, especially for a motor vehicle, comprising a screen wiper blade (1) carrying an articulating pin (7) adapted to cooperate with an end connecting element (26) of a screen wiper arm (2), with the said pin projecting laterally with respect to the blade in such a way that the arm (2) is disposed laterally with respect to the said blade, characterised in that the screen wiper arm carries a shroud (40) which is provided with means (57) locking it with the arm, for covering the end connecting element of the said arm.

2. A screen wiper according to Claim 1, characterised in that the shroud (40) carries a mounting groove (42).

3. A screen wiper according to Claim 1, characterised in that the locking means consist of a projection (59) carried by the shroud (40) and cooperating with an aperture (32) carried by the arm (2).

4. A screen wiper according to one of the preceding Claims, characterised in that the shroud (40) carries abutments (58) for linear movement of the arm (2).

5. A screen wiper according to Claim 4, characterised in that the abutments for linear movement (58) consist of surfaces (63) cooperating with the arm (2).

6. A screen wiper according to one of the preceding Claims, characterised in that the shroud (40) carries means (67) for positioning it with respect to the arm (2).

7. A screen wiper according to Claim 6, characterised in that the positioning means (67) consist of a pad (68,68') cooperating with a recess (69,69').

8. A screen wiper according to Claim 7, characterised in that the pad (68,68') is carried by the shroud or the arm, and cooperates with the recess (69,69') carried by the arm or the shroud.

9. A screen wiper according to Claim 7, characterised in that the positioning abutments (67) consist of at least one lateral projection (73) cooperating with seatings (74) of the arm.

10. A screen wiper according to one of the preceding Claims, in which the end connecting element (26) is connected to a pin (7), characterised in that the mounting groove (50) cooperates with a shoulder (10) of the pin (7).

11. A screen wiper according to Claim 1, characterised in that the shroud (40) comprises a housing (41) which is extended by a loop portion (42).

## Patentansprüche

1. Scheibenwischer, insbesondere für Kraftfahrzeuge, bestehend aus einem Wischerblatt (1) mit einem Gelenkbolzen (7) für das Zusammenwirken mit einem Verbindungsende (26) eines Scheibenwischerarms (2), wobei der besagte Gelenkbolzen seitlich im Verhältnis zum Wischerblatt vorspringt, so daß der Scheibenwischerarm (2) zeitlich im Verhältnis zu dem besagten Wischerblatt angeordnet ist, **dadurch gekennzeichnet,** daß der Scheibenwischerarm eine Abdeckkappe (40) mit Mitteln (57) für die Arretierung am Scheibenwischeram trägt, um das Verbindungsende des besagten Scheibenwischerarms abzudecken.

2. Scheibenwischer nach Anspruch 1 , **dadurch gekennzeichnet,** daß die Abdeckkappe (40) mit einer Einbaunut (52) versehen ist.

3. Scheibenwischer nach Anspruch 1 , **dadurch gekennzeichnet,** daß die Verriegelungsmittel aus einem Ansatz (59) bestehen, der an der Abdeckkappe (40) vorgesehen ist und mit einer am Scheibenwischerarm (2) angebrachten Öffnung (32) zusammenwirkt.

4. Scheibenwischer nach einem der vorangehenden Ansprüche , **dadurch gekennzeichnet**, daß an der Abdeckkappe (40) Verschiebungsanschläge (58) für den Scheibenwischerarm (2) vorgesehen sind.

5. Scheibenwischer nach Anspruch 4 , **dadurch gekennzeichnet,** daß die Verschiebungsanschläge (58) aus Auflageflächen (63) bestehen, die mit dem Scheibenwischerarm (2) zusammenwirken.

6. Scheibenwischer nach einem der vorangehenden Ansprüche , **dadurch gekennzeichnet**, daß an der Abdeckkappe (40) Positioniermittel (67) für den Scheibenwischerarm (2) vorgesehen sind.

7. Scheibenwischer nach Anspruch 6 , **dadurch gekennzeichnet**, daß die Positioniermittel (67) aus einem Vorsprung (68, 68') bestehen, der mit einer Aussparung (69, 69') zusammenwirkt.

8. Scheibenwischer nach Anspruch 7 , **dadurch gekennzeichnet,** daß der Vorsprung (68, 68') an der Abdeckkappe oder am Scheibenwischerarm angeordnet ist und mit der am Scheibenwischerarm bzw. an der Abdeckkappe vorgesehenen Aussparung (69, 69') zusammenwirkt.

9. Scheibenwischer nach Anspruch 7 , **dadurch gekennzeichnet,** daß die Positionieranschläge (67) aus mindestens einem seitlichen Ansatz (73) bestehen, der mit Aufnahmen (74) des Scheibenwischerarms zusammenwirkt.

10. Scheibenwischer nach einem der vorangehenden Ansprüche, bei dem das Verbindungsende (26) mit einem Stift (7) verbunden ist, **dadurch gekennzeichnet**, daß die Einbaunut (50) mit einer Schulter (10) des Stifts (7) zusammenwirkt.

11. Scheibenwischer nach Anspruch 1 , **dadurch gekennzeichnet**, daß die Abdeckkappe (40) aus einem Gehäuse (41) besteht, an das sich ein Aufsatz (42) anschließt.
